# EUROPEAN PATENT APPLICATION

(11) **EP 2 457 784 A1**
(43) Date of publication of application: **30.05.2012**
(21) Application number: 11275147.4
(22) Date of filing: 25.11.2011
(51) Int. Cl.: B60R 25/10

(54) **Improvements in and relating to vehicle security systems**

(30) Priority: 26.11.2010 GB 201020078
(71) Applicant: Ellard, Jonathan Paul, Taunton, Somerset TA1 1SW (GB)
(72) Inventor: Ellard, Jonathan Paul, Taunton, Somerset TA1 1SW (GB)
(74) Representative: Lynch, Lyndsey Ann

(57) **Abstract**

An embodiment of vehicle security system 10 described herein comprises a plurality of PIR sensors 12 mounted to the roof section of or detachable trailer of a HGV (40 Figure 2). The PIR sensors look down on the cargo area (45) and detect movement at the cargo area. They sensors are wireless and each have their own battery power supply, thus require little time to fit. An alarm unit 14 detects signals from the sensors and can trigger an alarm, either on the trailer, or remotely via a GSM type wireless communication device 16. The system 10 includes a GPS signal receiver built into the GSM communication device 16 to provide the geographical location of trailer. The alarm unit and GSM device may each be powered by a rechargeable battery, which may be topped up by a photovoltaic panel mounted 13 externally on the roof of the trailer.

## Description

This invention relates to a vehicle security system, in particular but not exclusively, providing a monitoring and alarm system, for protecting the cargo area of large vehicles such as heavy goods vehicles (HGVs).

HGVs often carry valuable cargo which cannot always be guarded, for example when the driver has to take a break. One very common construction of a load carrier for an HGV is a so called curtain sided trailer which can be easily cut open to steal the cargo if unattended. In addition, it is increasingly common for people to stow away in HGVs to cross borders, and a curtain sided trailer is an easy target for this.

The fitting of an alarm to an HGV is known. These alarms immobilise the towing vehicle if theft of the towing vehicle is attempted. However, these systems do not protect the cargo area. GB2378027 describes a cargo area protector which employs a conductive loop around a curtain sided trailer. Once the loop is broken an alarm sounds. This system is satisfactory but relies on a conductive loop which is venerable to damage.

Other alarms are available, but these require a constant supply of power from a vehicle's battery, and require wires to supply that power and to provide a signal to/from an alarm master box. Wires take time to fit and can be damaged easily, so the uptake of these alarms is slow.

The inventor has realised that an improved monitoring and alarm system is desirable, and embodiments of the invention address the problems mentioned above.

According to the invention, there is provided, a vehicle security system comprising: one or more sensors mounted or mountable within or adjacent a cargo area of a vehicle operable to provide a wireless signal indicative of a sensed condition; an alarm unit located in the vicinity of the or each sensor for receiving said wireless signal or signals of said one or more sensors and for outputting a trigger signal upon receipt of the signal from the sensor or one of the sensors indicative of the sensed condition; a geographical position determining device; and a wireless communication means for communicating to a remote location the existence of the trigger signal, and the geographical position from the geographical position determining device.

In an embodiment, the vehicle security system further includes an independent rechargeable battery and solar generated electricity supply each for supplying electricity to the wireless communication means; the geographical position determining device; and the alarm unit, the battery being arranged to accept power from a vehicle power source and from the solar generated supply.

In an embodiment, the vehicle security system further includes a charge regulator, for regulating the voltage and/or current supplied to the battery and/or the wireless communication means; the geographical position determining device; and the alarm unit.

The system is operable such that the wireless communication means can receive signals from the remote location, for example for the purpose of activating or deactivating the alarm unit.

In an embodiment said activation or deactivation is achieved by means of the wireless communication means operating a local wireless transmitter providing a signal received at the alarm unit for activating or deactivating the alarm unit.

Conveniently, said one or more sensors are proximity sensors and the sensed condition is a change in the local characteristics of the area adjacent the proximity sensor(s)

Preferably, the proximity sensor(s) are passive infra red (PIR) proximity sensors for detecting changes in the pattern of IR light falling on said sensors.

Additionally said sensors include break-contact sensors.

In an embodiment, said geographical position determining device comprises a satellite signal receiving global positioning device and/or a cellular communications signal strength position estimation device.

In an embodiment, the wireless communication means utilises a cellular communications service, for example via a general packet oriented mobile data service (GPRS) for example using a wireless application protocol (WAP) signal.

According to a second aspect the invention provides a detachable vehicle trailer including a vehicle security system as defined above, and an enclosed or enclosable cargo area housing said proximity sensor(s), said proximity sensor(s) each being provided with a battery type power source, said rechargeable battery and solar generated power supply being located on the trailer for powering the wireless communication means; the geographical position determining device; and the alarm unit.

According to a third aspect the invention provides a method of fitting a vehicle security system to the trailer of a vehicle having a covered cargo area, the method including the steps of fitting a vehicle security system as defined above to the trailer, such that the one or more wireless proximity sensors are mounted to an internal roof section of the cargo area and each have their own power source; and attaching the alarm unit, the geographical position determining device and wireless communication means to the trailer within a tamper-proof container.

In an embodiment, the rechargeable battery is located within the box, and the solar generated power supply is provided by a photovoltaic panel mounted externally on the roof.

The invention extends to any novel feature described or illustrated herein or inventive combination of features described or illustrated herein. The invention may be performed in various ways and an embodiment thereof will now be described by way of example only, reference being made to the accompanying drawings, in which:-
Figure 1 shows a schematic representation of a vehicle security system according to the invention;
Figure 2 shows the security system illustrated in Figure 1, deployed in use with a vehicle trailer;
Figure 3 shows a plan sectional view through the trailer shown in Figure 2 along the line III-III; and
Figure 4 shows a vertical section to the rear of the trailer shown in Figure 2 along the section line IV-IV.

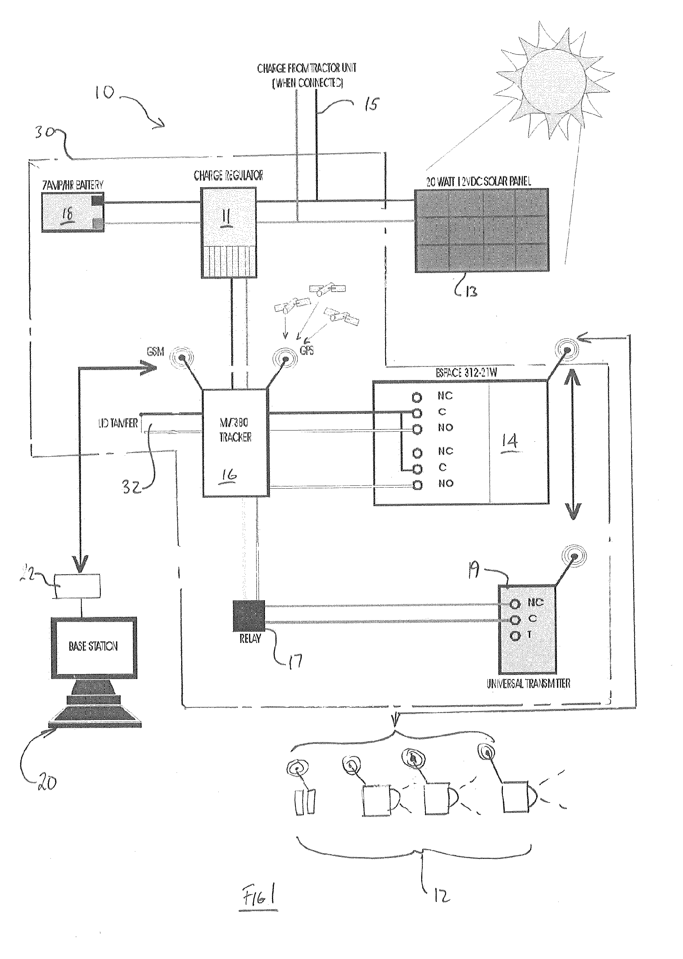

Referring to Figure 1, there is shown generally a schematic representation of a vehicle security system 10 and a remote base station 20. The security system 10 includes a number of wireless remote sensors 12 and an alarm unit 14 which, in use, listens for signals from the remote sensors 12 send via RF signals. The output of the alarm unit 14 is connected to a GPS tracker unit 16. This tracker unit receives signals from a GPS receiver indicating its geographical location and includes and transmitter and receiver for communication to a base station 20 via a GSM cellular telephone network or the like. The alarm unit can include also a rechargeable battery 18, a charge regulator 11, a photovoltaic panel 13 and a disconnectable electrical supply 15 for connecting to a vehicle electrical supply when available. The alarm unit 10 also includes a switching relay 17 which can operate an RF transmitter 19 for activating or deactivating the alarm unit 14.

In use, the components shown within the chain dotted line 30 are intended to be housed in an alarm box (discussed below). The alarm box will include a anti-tamper switch 32 for providing a signal if the box is opened. The photovoltaic panel 13 is intended to be mounted to the roof of a trailer or the like and the sensors 12 are intended to be mounted within the trailer to protect its cargo area.

In operation, one of the sensors 12 includes an openable or closeable contact for indicating the opening or closing of a cargo area door, the other sensors 12 are proximity sensors for example passive infra red (PIR) sensors which will produce a signal if the characteristics of the area around them alters. In this case, if the infra red light pattern falling on the sensors changes then they can produce a signal. The sensors 12 produce a RF signal for reading by the alarm unit 14. It will be noted that, because the sensors 12 are wireless then there is no need to run wires from the sensors to the alarm unit 14. This saves significant time in installation and improves the reliability of the alarm unit because there are no wires to be damaged. If an alarm condition is sensed by the alarm unit 14, then an output signal can be generated for reading by the tracker system 16. The tracker system can then signal to the base station via the GSM network that an alarm condition has been triggered. The base station includes a receiver and transmitter unit 22 which can both receive and send signals to the tracking unit 16. The tracking unit 16 not only provides information on the status of the alarm unit 14 but also provides a geographical location of the security system 10. Such information is particularly useful where the alarm system 10 is connected to a stolen vehicle, or where the alarm system is connected to a vehicle which is not on its intended route. In addition the tracking system 16 can relay regular geographical information to the base station 20 so that it is apparent whether or not the alarm unit is moving. If the alarm unit is not moving and the alarm is not activated then the alarm can be remotely activated via the base station by sending an appropriate signal to the tracker unit which then activates the relay 17 to cause the activation transmitter 19 to activate (or deactivate where appropriate) the alarm unit 14.

The components of the alarm system 10 are powered by a rechargeable battery 18 which can be topped up by a photovoltaic cell 13 via a regulator 11. The alarm system should have enough power to last for several days if no auxiliary power is supplied via a supply 15. In use, if the alarm system 10 is connected to a detachable trailer, then the auxiliary supply 15 will be disconnected when the trailer is disconnected from its towing vehicle.

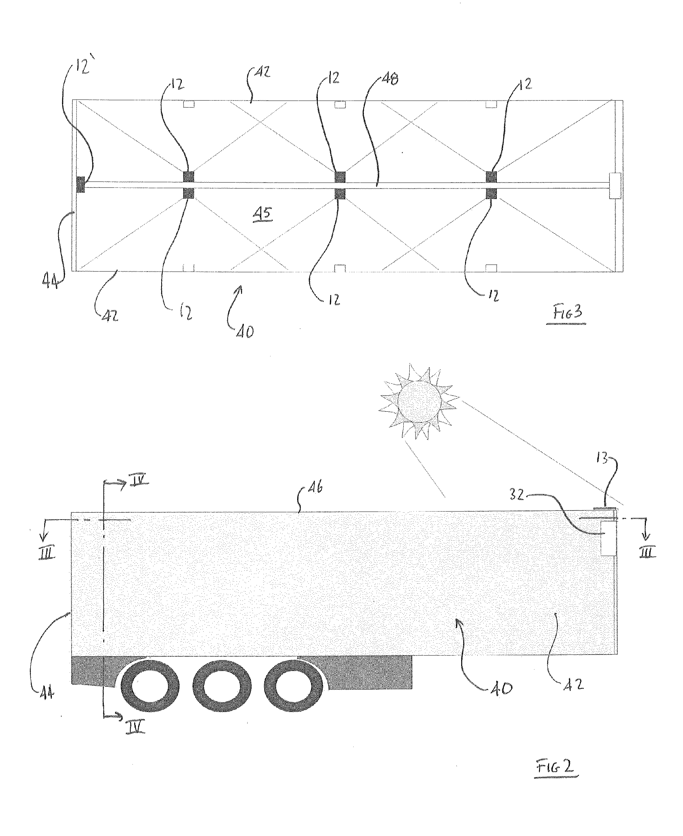

Figure 2 shows a trailer 40 having curtain sides 42 and rigid rear doors 44, including also an alarm unit housed within a box 32 and a panel 13 for producing electricity via sunlight mounted to a substantially rigid roof section 46 of the trailer 40.

Figure 3 shows a sectional plan view of the trailer 40 on the sectional line III-III shown in figure 2. The roof section 46 shown in Figure 2 includes a supporting spar 48 to which are attached six spaced PIR sensors 12 and a break contact sensor 12' shown in the door end 44 of the trailer 40. The six sensors 12 must look down at the cargo area 45 and detect movement at that area.

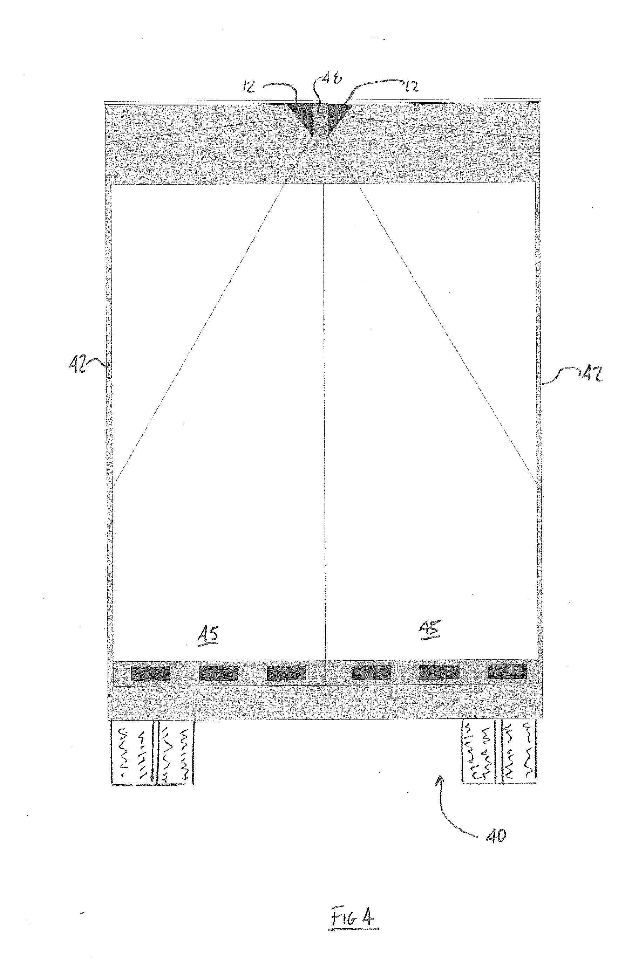

Figure 4 shows a view in the direction of section line IV-IV and illustrates the position of the PIR sensors 12 generally looking down at the cargo area 45.

The above embodiment is just one example of the invention defined by the claims. Modifications, variants, additions or omissions will be apparent to the skilled addressee. For example, the proximity sensors described use passive infra red sensing, although other sensors for example ultrasonic sensors could be employed. The tracker unit 16 employs a global positioning system receiver to determine its position, although other positioning systems could be employed, for example signal strength determination from GSM stations could be employed. The use of relay 17 and a wireless transmitter 19 for activating or deactivating the alarm unit 14 is used, however the relay 17 and transmitter 19 could be replaced by a wired activation or deactivation signal. It is preferred that the tracker 16 and base station communicate via a GSM cellular telephone network and in particular using a general packet oriented mobile data service (GPRS) such as a system that used wireless application protocol (WAP), although other remote communication is possible, for example a VHF data transmission or other RF communication. The sensors 12 are intended to have their own battery supply which will generally last 3-5 years.

The alarm unit 14 may include an audible and/or light signal emitter on the trailer 40 (not shown) to indicate an alarm condition. The tracker system 16 may include two way speech communication.

## Claims

1. A vehicle security system comprising:
one or more sensors mounted or mountable within or adjacent a cargo area of a vehicle operable to provide a wireless signal indicative of a sensed condition;
an alarm unit located in the vicinity of the or each sensor for receiving said wireless signal or signals of said one or more sensors and for outputting a trigger signal upon receipt of the signal from the sensor or one of the sensors indicative of the sensed condition;
a geographical position determining device; and
a wireless communication means for communicating to a remote location the existence of the trigger signal, and the geographical position from the geographical position determining device.

2. A vehicle security system as claimed in claim 1 further including an independent rechargeable battery and solar generated electricity supply each for supplying electricity to the a wireless communication means; the geographical position determining device; and the alarm unit, the battery being arranged to accept power from a vehicle power source and from the solar generated supply.

3. A vehicle security system as claimed in claim 2 further including a charge regulator, for regulating the voltage and/or current supplied to the battery and/or the a wireless communication means; the geographical position determining device; and the alarm unit.

4. A vehicle security system as claimed in any one of the proceeding claims operable such that the wireless communication means can receive signals from the remote location, for example for the purpose of activating or deactivating the alarm unit.

5. A vehicle security system as claimed in claim 4, wherein said activation or deactivation is achieved by means of the wireless communication means operating a local wireless transmitter providing a signal received at the alarm unit for activating or deactivating the alarm unit.

6. A vehicle security system as claimed in any one of the preceding claims, wherein said one or more sensors are proximity sensors and the sensed condition is a change in the local characteristics of the area adjacent the proximity sensor(s)

7. A vehicle security system as claimed in claim 6, wherein the proximity sensor(s) are passive infra red (PIR) proximity sensors for detecting changes in the pattern of IR light falling on said sensors.

8. A vehicle security system as claimed in any one of the preceding claims, wherein said sensors include break-contact sensors.

9. A vehicle security system as claimed in any one of the preceding claims, wherein said geographical position determining device comprises a satellite signal receiving global positioning device and/or a cellular commutations signal strength position estimation device.

10. A vehicle security system as claimed in any one of the preceding claims, wherein a wireless communication means utilises a cellular communications service, for example via a general packet oriented mobile data service (GPRS) for example using a wireless application protocol (WAP) signal.

11. A detachable vehicle trailer including a vehicle security system as claimed in claim 2 and an enclosed or enclosable cargo area housing said proximity sensor(s), said proximity sensor(s) each being provided with a battery type power source, said rechargeable battery and solar generated power supply being located on the trailer for powering the wireless communication means; the geographical position determining device; and the alarm unit.

12. A method of fitting a vehicle security system to the trailer of a vehicle having a covered cargo area, the method including the steps of fitting a vehicle security system as defined in any one of the preceding claims 1 to 10 to the trailer, such that the one or more a wireless proximity sensors are mounted to an internal roof section of the cargo area and each have their own power source; and attaching the alarm unit, the geographical position determining device and wireless communication means to the trailer within a tamper-proof.

13. A method of fitting a vehicle security system to the trailer as claimed in claim 12, when dependent on claim 2, wherein, the rechargeable battery is located within the box, and the solar generated power supply is provided by a photovoltaic panel mounted externally on the roof.
